# EUROPEAN PATENT APPLICATION

(11) **EP 4 765 035 A1**
(43) Date of publication of application: **24.06.2026**
(21) Application number: 24853815.9
(22) Date of filing: 14.08.2024
(51) Int. Cl.: G06V 10/762

(54) **VIDEO CLUSTERING METHOD, DEVICE, AND STORAGE MEDIUM**

(30) Priority: 16.08.2023 CN 202311036112
(71) Applicant: Beijing Zitiao Network Technology Co., Ltd., Beijing 100190 (CN); Lemon Inc., Grand Cayman, KY1-1205 (KY)
(72) Inventor: GU, Xin, Beijing 100028 (CN); YE, Hanhua, Beijing 100028 (CN); CHEN, Guang, Los Angeles, California 90066 (US); WANG, Xinyao, Los Angeles, California 90066 (US); WANG, Yufei, Los Angeles, California 90066 (US); WEN, Longyin, Los Angeles, California 90066 (US)
(74) Representative: Marks & Clerk LLP
(86) International application number: PCT/CN2024/112087
(87) International publication number: WO 2025/036408

(57) **Abstract**

Embodiments of the present disclosure provide a video clustering method, a device, and a storage medium. The method comprises: obtaining all videos to be classified of a user from a video library; for each video to be classified among all of the videos to be classified, using a preset feature extraction model to extract a feature for determining an inter-video context relationship; on the basis of the feature of each video to be classified and a preset video context discrimination model, determining whether a context relationship exists between any two videos to be classified; and clustering and sorting videos to be classified having a context relationship, to obtain at least one video group. According to the embodiments of the present disclosure, clustering and sorting videos to be classified having a context relationship are automatically implemented on the basis of a preset model, without requiring a user to perform operations such as manually annotating labels for, classifying, or sorting the videos to be classified, so that the clustering and sorting efficiency of the videos to be classified is increased and the costs are reduced. In addition, the clustering and sorting of the videos to be classified provide convenience for video viewers to watch videos continuously, so that the video watching experience is improved.

## Description

The present disclosure claims priority to Chinese Patent Application No. 202311036112.8, filed on August 16, 2023, which is incorporated herein by reference in its entirety as a part of the present disclosure.

### TECHNICAL FIELD

Embodiments of the present disclosure relate to a video clustering method, a device, and a storage medium.

### BACKGROUND

With the development of network technologies and the popularization of intelligent terminals, videos have gradually become an important channel for people to entertain and obtain information. Generally, there are some videos that usually belong to the same series of videos, such as different episodes of the same TV series, or a long video is divided into different short videos, etc. Therefore, it is necessary to cluster the videos, so that video viewers can watch the videos according to the clustering.

In the related art, video uploaders are usually required to label the uploaded videos and cluster them according to the labels, but manual labeling and manual clustering are inefficient, and fast clustering of videos cannot be achieved.

### SUMMARY

Embodiments of the present disclosure provide a video clustering method, a device, and a storage medium to implement fast clustering and sorting of to-be-classified videos.

In a first aspect, an embodiment of the present disclosure provides a video clustering method, including:
obtaining, from a video library, all to-be-classified videos of a user;
extracting, for each of the all to-be-classified videos, a feature for determining a context relationship between videos by using a preset feature extraction model;
determining whether a context relationship exists between any two to-be-classified videos according to the feature of each to-be-classified video and a preset video context discrimination model; and
clustering and sorting the to-be-classified videos with the context relationship to obtain at least one video group, where videos included in each video group are sorted in a context order.

In a second aspect, an embodiment of the present disclosure provides a video clustering device, including:
an obtaining unit, configured to obtain, from a video library, all to-be-classified videos of a user;
a feature extracting unit, configured to extract, for each of the all to-be-classified videos, a feature for determining a context relationship between videos by using a preset feature extraction model;
a context discriminating unit, configured to determine whether a context relationship exists between any two to-be-classified videos according to the feature of each to-be-classified video and a preset video context discrimination model; and
a clustering unit, configured to cluster and sort the to-be-classified videos with the context relationship to obtain at least one video group, where videos included in each video group are sorted in a context order.

In a third aspect, an embodiment of the present disclosure provides an electronic device, including: at least one processor and a memory;
where the memory stores computer-executable instructions; and
the at least one processor executes the computer-executable instructions stored in the memory to cause the at least one processor to execute the video clustering method according to the above first aspect and various possible designs of the first aspect.

In a fourth aspect, an embodiment of the present disclosure provides a computer-readable storage medium, where computer-executable instructions are stored in the computer-readable storage medium, and when the computer-executable instructions are executed by a processor, the video clustering method according to the above first aspect and various possible designs of the first aspect is implemented.

In a fifth aspect, an embodiment of the present disclosure provides a computer program product, including computer-executable instructions, and when the computer-executable instructions are executed by a processor, the video clustering method according to the above first aspect and various possible designs of the first aspect is implemented.

### BRIEF DESCRIPTION OF DRAWINGS

In order to more clearly explain the technical solutions in the embodiments of the present disclosure or in the related art, the following will briefly introduce the drawings that need to be used in the description of the embodiments or the related art. Obviously, the drawings in the following description are some embodiments of the present disclosure. For those of ordinary skill in the art, other drawings may be obtained based on these drawings without creative efforts.
Fig. 1 is a schematic diagram of an application scenario of a video clustering method provided by an embodiment of the present disclosure;
Fig. 2 is a schematic flowchart of a video clustering method provided by an embodiment of the present disclosure;
Fig. 3 is a schematic diagram of feature extraction provided by an embodiment of the present disclosure;
Fig. 4 is a schematic diagram of a case of a new added video provided by an embodiment of the present disclosure;
Fig. 5 is a schematic diagram of a case of a deleted video provided by an embodiment of the present disclosure;
Fig. 6 is a structural block diagram of a video clustering device provided by an embodiment of the present disclosure; and
Fig. 7 is a schematic diagram of a hardware structure of an electronic device provided by an embodiment of the present disclosure.

### DETAILED DESCRIPTION

In order to make objectives, technical solutions and advantages of embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of the embodiments. Based on the embodiments in the present disclosure, all other embodiments obtained by those of ordinary skill in the art without creative efforts belong to the protection scope of the present disclosure.

At present, there are some cases where videos usually belong to the same series of videos, such as different episodes of the same TV series, or a long video is divided into different short videos, etc. Therefore, it is necessary to cluster the videos, so that video viewers may watch the videos according to the clustering, especially watch the videos in order. For example, after watching a certain video, the video viewer will continue to watch the next video that is connected to the video.

In the related art, video uploaders are usually required to label the uploaded videos and cluster the uploaded videos according to labels, but manual labeling and manual clustering are inefficient, and fast clustering of videos cannot be achieved. In addition, video serial numbers are added to video titles, and then the videos are sorted according to the video serial numbers after clustering. Similarly, labeling video serial numbers also requires manpower and is inefficient. In addition, if the video serial numbers are incorrect, it may lead to incorrect sorting of the clustered videos.

In order to solve the above technical problems, the present disclosure provides a video clustering method, which is expected to cluster videos quickly and efficiently, and at the same time, it is also expected that the clustered videos may be sorted in a context order. Considering that a machine learning model may achieve a video classification function after training, the present disclosure hopes to achieve video clustering and sorting with the help of the machine learning model. A feature extraction model and a video context discrimination model may be trained in advance, and then for all to-be-classified videos of a user, the feature extraction model may be used to extract a feature for determining a context relationship between videos for each to-be-classified video, and then the feature of each to-be-classified video is input into the video context discrimination model to determine whether a context relationship exists between any two to-be-classified videos; and the to-be-classified videos with the context relationship are clustered and sorted. The present disclosure automatically achieves clustering and sorting of to-be-classified videos with a context relationship based on a preset model, without the need for users to manually label, classify, sort, etc. the to-be-classified videos, improves the efficiency and reduces the cost of clustering and sorting of to-be-classified videos, and the clustering and sorting of to-be-classified videos provides convenience for video viewers to watch videos continuously, which is beneficial to improving video viewing experience.

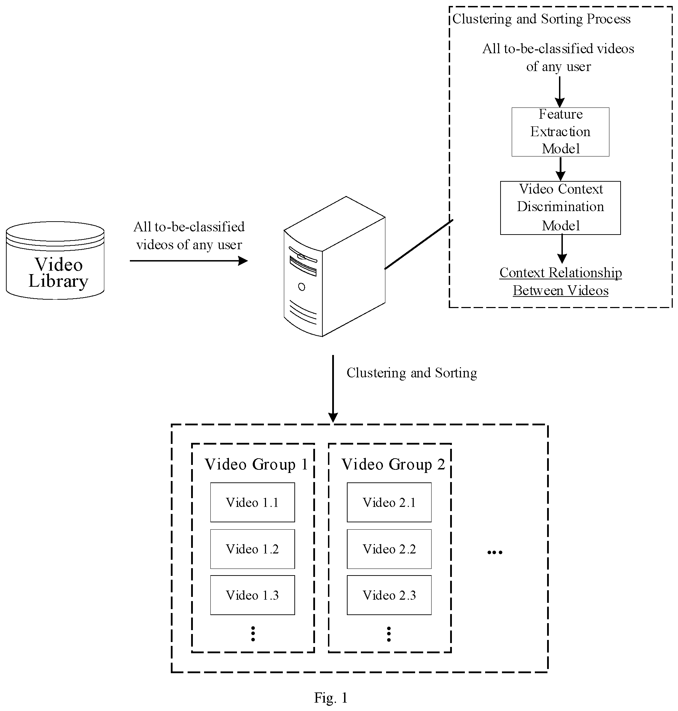

The video clustering method of the present disclosure is applicable to a scenario where a server or a terminal device clusters and sorts videos. For example, as shown in Fig. 1, the video clustering method is applied to a server, and a preset feature extraction model and a preset video context discrimination model are pre-deployed in the server. The server may first classify videos in a video library preliminarily in units of users (video uploaders), to obtain all to-be-classified videos of a user, and then input the to-be-classified videos into the feature extraction model separately to extract the feature for determining the context relationship between the videos for each to-be-classified video, input the feature for each to-be-classified video into the video context discrimination model to determine whether a context relationship exists between any two to-be-classified videos; and cluster and sort the to-be-classified videos with the context relationship to obtain at least one video group, where videos included in each video group are sorted in a context order.

It should be noted that the user information and data involved in this application are all information and data authorized by users or fully authorized by all parties, and the collection, use and processing of relevant data need to comply with relevant laws, regulations and standards of relevant countries and regions, and provide corresponding operation entrance for users to choose to authorize or reject.

The video clustering method of the present disclosure will be described in detail below in conjunction with specific embodiments.

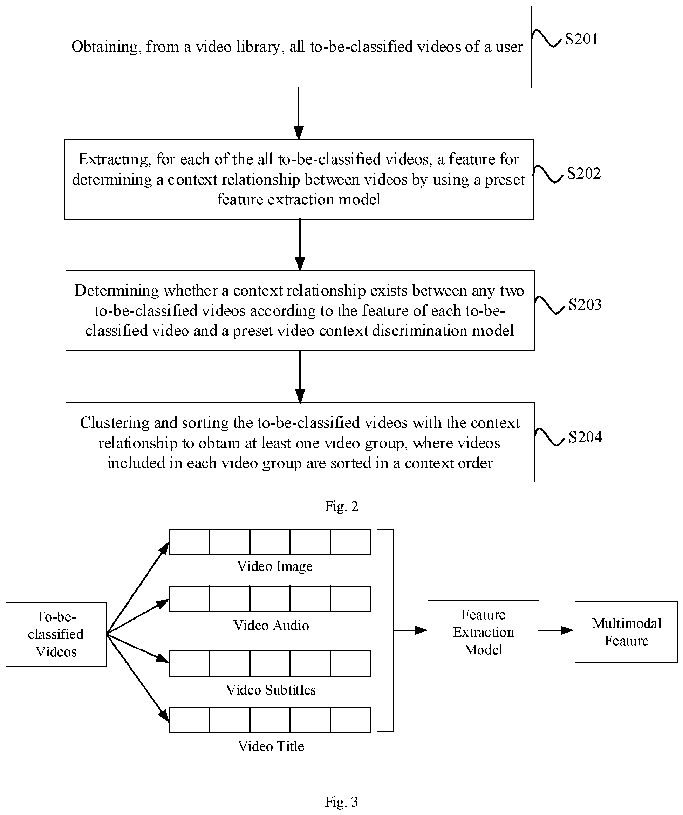

Referring to Fig. 2, Fig. 2 is a schematic flowchart of a video clustering method provided by an embodiment of the present disclosure. The method of this embodiment may be applied to a terminal device or a server, and the video clustering method includes the following steps.

S201, obtaining, from a video library, all to-be-classified videos of a user.

In this embodiment, the video library includes videos uploaded by different users, and video clustering and sorting need to be performed for each video of the same user, therefore, to-be-classified videos included in the video library may be classified preliminarily in units of users (video uploaders) to obtain to-be-classified videos of each user, and then all to-be-classified videos of any user of the users may be obtained, so as to perform corresponding operations for the to-be-classified videos of a user (video uploader) in the following steps.

S202, extracting, for each of the all to-be-classified videos, a feature for determining a context relationship between videos by using a preset feature extraction model.

In this embodiment, all to-be-classified videos of a user are clustered based on a context relationship, that is, videos with a context relationship are classified into one video group. For example, all to-be-classified videos of the user include: video 1.1, video 1.2, video 1.4, video 1.5, video 2.1, and video 2.2, where video 1.1, video 1.2, video 1.4, and video 1.5 belong to a same series of videos, video 1.1 and video 1.2 have a context relationship (adjacent), video 1.4 and video 1.5 have a context relationship (adjacent), while video 1.2 and video 1.4 do not have a context relationship (not adjacent), video 2.1 and video 2.2 belong to another series of videos and have a context relationship (adjacent). The purpose of this embodiment is to cluster the above videos according to the context relationship, and 3 video groups may be obtained, where video group 1 includes video 1.1 and video 1.2, video group 2 includes video 1.4 and video 1.5 (although belonging to the same series of videos as video 1.1 and video 1.2, but since they do not have a context relationship, they cannot be classified into the same group), and video group 3 includes video 2.1 and video 2.2.

In order to achieve the above purpose, in this embodiment, the feature is extracted for each of all to-be-classified videos of the user. Different from an ordinary video clustering method, the feature extracted from a video in this embodiment is a feature for determining a context relationship between videos, and by comparing the feature of any two to-be-classified videos, it may be determined whether the two to-be-classified videos have a context feature, and if the two to-be-classified videos have a context feature, the order of the two to-be-classified videos may be further determined. The feature for determining the context relationship between videos may be achieved by machine learning, that is, in this embodiment, a feature extraction model needs to be trained in advance, and through the training process, the feature extraction model has a function of extracting the above feature for determining the context relationship between videos.

Optionally, for any to-be-classified video, the feature for determining the context relationship between videos may be extracted by using the feature extraction model based on one or more of visual information, audio information, title information, and video subtitles of the to-be-classified video. In this embodiment, as shown in Fig. 3, one or more of the visual information (video image), the audio information, the title information, and the video subtitles of the to-be-classified video may be obtained and input into the feature extraction model, and one or more of a visual feature, an audio feature, a title feature, and a subtitle feature may be extracted accordingly, and then the extracted features may be fused to obtain a multimodal feature, so as to more accurately determine the context relationship between videos.

S203, determining whether a context relationship exists between any two to-be-classified videos according to the feature of each to-be-classified video and a preset video context discrimination model.

In this embodiment, after obtaining the feature for determining the context relationship between videos of each of all to-be-classified videos of the user, it may be determined whether a context relationship exists between every two to-be-classified videos based on the feature of each to-be-classified video. In this embodiment, a video context discrimination model may be trained in advance, and the video context discrimination model may output a determination result of whether two to-be-classified videos have a context relationship according to the input feature for determining the context relationship between videos of any two to-be-classified videos; or the feature for determining the context relationship between videos of a plurality of to-be-classified videos may be input into the video context discrimination model in batch, and a determination result of whether any two of the plurality of to-be-classified videos have a context relationship may be output.

For the feature for determining the context relationship between videos of any two to-be-classified videos, the video context discrimination model may obtain a similarity between the two features, identify a degree of the context relationship between the two to-be-classified videos based on a size of the similarity, and then determine whether the two to-be-classified videos have a context relationship based on the similarity. For example, it is determined whether a similarity value is greater than a preset threshold, and if it is greater than the preset threshold, it is determined that the two to-be-classified videos have a context relationship, and then the determination result of whether the two to-be-classified videos have a context relationship is output.

In this embodiment, the feature for determining the context relationship between videos of each of all to-be-classified videos of a user may be input into the video context discrimination model in batch, and the video context discrimination model may generate a similarity matrix, where any similarity value in the similarity matrix is used to identify a degree of a context relationship between two corresponding to-be-classified videos, and then it may be determined whether a context relationship exists between any two to-be-classified videos according to the similarity matrix.

It should be noted that since video content with a context relationship is connected, there is an order between videos with a context relationship. When obtaining a similarity between features of any two to-be-classified videos according to the features of the two to-be-classified videos, two similarity values may be obtained, that is, assuming that the any two to-be-classified videos are a first to-be-classified video and a second to-be-classified video, a corresponding similarity value between the first to-be-classified video and the second to-be-classified video and a corresponding similarity value between the second to-be-classified video and the first to-be-classified video may be obtained, where the corresponding similarity value between the first to-be-classified video and the second to-be-classified video is used to represent a probability degree that the first to-be-classified video and the second to-be-classified video have a context relationship, and the first to-be-classified video is before and the second to-be-classified video is after, and the corresponding similarity value between the second to-be-classified video and the first to-be-classified video is used to represent a probability degree that the first to-be-classified video and the second to-be-classified video have a context relationship, and the second to-be-classified video is before and the first to-be-classified video is after.

Therefore, if it is determined that a context relationship exists between the first to-be-classified video and the second to-be-classified video, an order between the first to-be-classified video and the second to-be-classified video may be determined according to sizes of the corresponding similarity value between the first to-be-classified video and the second to-be-classified video and the corresponding similarity value between the second to-be-classified video and the first to-be-classified video. Specifically, if the corresponding similarity value between the first to-be-classified video and the second to-be-classified video is greater than the corresponding similarity value between the second to-be-classified video and the first to-be-classified video, it is determined that the first to-be-classified video is before and the second to-be-classified video is after, and if the corresponding similarity value between the first to-be-classified video and the second to-be-classified video is less than the corresponding similarity value between the second to-be-classified video and the first to-be-classified video, it is determined that the second to-be-classified video is before and the first to-be-classified video is after.

S204, clustering and sorting the to-be-classified videos with the context relationship to obtain at least one video group, where videos included in each video group are sorted in a context order.

In this embodiment, through the above process, it may be determined whether a context relationship exists between any two to-be-classified videos, and if it is determined that the two to-be-classified videos have a context relationship, the order of the two to-be-classified videos, and then the to-be-classified videos with the context relationship are clustered and sorted. For example, it is determined that video 3.1 and video 3.2 have a context relationship, and video 3.1 is before and video 3.2 is after, and video 3.2 and video 3.3 have a context relationship, and video 3.2 is before and video 3.3 is after. After clustering and sorting, video 3.1, video 3.2, and video 3.3 are classified into one video group, and the order is video 3.1, video 3.2, and video 3.3 in turn.

Further, after obtaining the at least one video group, the method further includes:
determining whether a currently playback video is the last video in a video group in which the currently playback video is located;
if the currently playback video is not the last video in the video group in which the currently playback video is located, controlling a next video in the video group in which the currently playback video is located to continue playing after the currently playback video ends; or
if the currently playback video is the last video in the video group in which the currently playback video is located, stopping continuing playing and/or displaying prompt information after the currently playback video ends.

In this embodiment, when a terminal device of a video viewer is before, at the end of, or after the end of playing a currently playback video, it may be determined whether the currently playback video is the last video in a video group where the currently playback video is located. If the currently playback video is not the last video in the video group where the currently playback video is located, it indicates that the video group where the currently playback video is located further includes a next video that is connected to the currently playback video (that is, has a context relationship with the currently playback video), and the terminal device may be controlled to continue playing the next video after the currently playback video ends, until the last video in the video group is playback completely; if the currently playback video is the last video in the video group where the currently playback video is located, it indicates that there is no next video connected to the currently playback video (that is, no next video has a context relationship with the currently playback video), at this time, it is possible to stop continuing playing after the currently playback video ends, and/or display prompt information, which is used to prompt the video viewer that there is no next video connected to the currently playback video after the currently playback video, or prompt the video viewer to select other video groups for playing. Based on automatic video playing of the above video group, it is convenient for video viewers to continuously watch a plurality of videos connected to each other, without manually searching for and playing the next video after one video ends, especially in a video playing scenario based on a feed stream. For example, a feed stream server pushes a certain video A1 to the terminal device, and the video A1 belongs to a certain video group A, and in the video group A, the video A1 has a next video A2 connected to the video A1 and having a context relationship with the video A1, and the video A2 may be playback directly after the video A1 is playback, and the video viewer does not need to manually search for and play the video A2, which simplifies user operations and improves video viewing experience.

According to the video clustering method provided by this embodiment, all to-be-classified videos of a user are obtained from a video library; for each of the all to-be-classified videos, a feature for determining a context relationship between videos is extracted by using a preset feature extraction model; whether a context relationship exists between any two to-be-classified videos is determined according to the feature of each to-be-classified video and a preset video context discrimination model; and the to-be-classified videos with the context relationship are clustered and sorted to obtain at least one video group, where videos included in each video group are sorted in a context order. Clustering and sorting of to-be-classified videos with a context relationship are automatically achieved based on a preset model, without the need for users to manually label, classify, sort, etc. the to-be-classified videos, which improves the efficiency and reduces the cost of clustering and sorting of to-be-classified videos, and the clustering and sorting of to-be-classified videos provides convenience for video viewers to continuously watch videos, which is beneficial to improving video viewing experience.

Based on any of the above embodiments, after obtaining the at least one video group, the method further includes the following.

S301, obtaining a new video of the user.

S302, extracting, for the new video, the feature for determining a context relationship between videos by using the feature extraction model.

S303, determining whether the new video has a context relationship with a first video or a last video in any of the video groups according to the feature of the new video, and features of the first video and the last video in the any of the video groups.

S304, in response to determining that the new video has the context relationship with the first video or the last video in the video group, adding the new video into the video group as a new first video or a new last video.

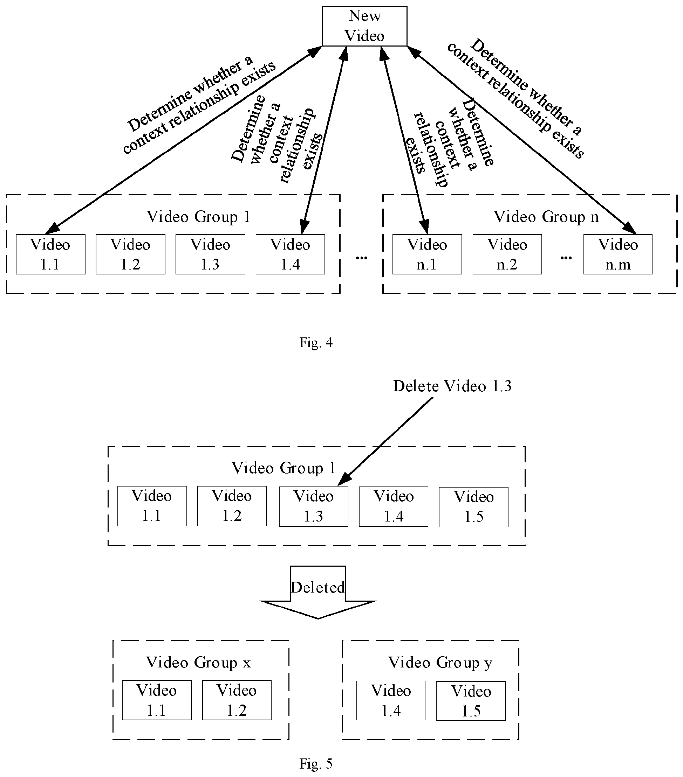

In this embodiment, after clustering and sorting all to-be-classified videos of a user to obtain at least one video group, if the user uploads a new video to the video library, the new video of the user may be obtained, and in a same way as S202, the feature extraction model is used to extract a feature for determining a context relationship between videos from the new video; and since videos with a context relationship have been clustered and sorted to obtain at least one video group, the new video may only have a context relationship with the first video or the last video of a certain video group, and cannot have a context relationship with any video in the middle of the video group (certainly, the new video may also be a completely independent video, and has no context relationship with the first video or the last video of any video group). In order to improve efficiency of determining a context relationship between the new video and already-clustered videos, in this embodiment, it is not necessary to separately determine whether the new video has a context relationship with all other videos of the user except the new video, but as shown in Fig. 4, it is only necessary to determine whether the new video has a context relationship with the first video or the last video in each video group on the basis of obtaining at least one video group through clustering and sorting. If it is determined that the new video has a context relationship with the first video in a certain video group, the new video is added to the video group and serves as a new first video, and if it is determined that the new video has a context relationship with the last video in a certain video group, the new video is added to the video group and serves as a new last video.

Based on any of the above embodiments, after obtaining the at least one video group, the method further includes the following.

S401, receiving a deleting instruction from the user for any target video in any of the video groups.

S402, in response to the target video not being the first video and the last video in the video group, deleting the target video, and dividing the video group into different video groups from the target video.

In this embodiment, for any video group, the user may delete any target video in the video group, where the target video is a video that the user needs to delete. If the target video is the first video or the last video in the video group, the target video may be directly deleted from the video group; if the target video is not the first video or the last video in the video group, after the target video is deleted, a video before the target video and a video after the target video do not have a context relationship, and the video group needs to be divided into different video groups, that is, divided from where the target video is deleted. As shown in Fig. 5, after video 1.3 is deleted from video group 1, video group 1 is divided into video group x and video group y before and after from video 1.3, to ensure that each of the divided video groups still has a context relationship.

Based on any of the above embodiments, the feature extraction model and the video context discrimination model need to be trained in advance, and a training process is as follows.

S501, obtaining a plurality of positive sample video groups and a plurality of negative sample video groups.

S502, performing joint training on the feature extraction model and the video context discrimination model according to the plurality of positive sample video groups and the plurality of negative sample video groups.

In this embodiment, for the joint training of the feature extraction model and the video context discrimination model, training samples need to be obtained first, where the training samples include a plurality of positive sample video groups and a plurality of negative sample video groups. Optionally, the positive sample video group includes two videos that belong to the same series of videos and have a context relationship. For example, a plurality of video clips are segmented from a long video, and any two adjacent video clips have a context relationship and may be used as a positive sample video group. For another example, any two adjacent videos in the same series of videos (such as the same TV series) have a context relationship and may also be used as a positive sample video group; and the negative sample video group may include two videos that belong to the same series of videos and do not have a context relationship. For example, two non-adjacent video clips in a long video may be used as a negative sample video group. For another example, any two non-adjacent videos in the same series of videos (such as the same TV series) do not have a context relationship and may also be used as a negative sample video group. In addition, the negative sample video group may also include two videos that belong to different series of videos. For example, one video clip is obtained from a first long video, and another video clip is obtained from a second long video, and the two video clips do not have a context relationship and may be used as a negative sample video group. For another example, any two videos in different series of videos (such as two TV series) do not have a context relationship and may also be used as a negative sample video group.

After the plurality of positive sample video groups and plurality of negative sample video groups are obtained, the joint training may be performed on the feature extraction model and the video context discrimination model based on the plurality of positive sample video groups and the plurality of negative sample video groups. Specifically, in a forward propagation process, a certain positive sample video group or a certain negative sample video group is input into the feature extraction model, the feature is extracted by the feature extraction model, and the feature output by the feature extraction model is input into the video context discrimination model to determine a context relationship, to obtain a determination result of the context relationship. A joint training loss of the feature extraction model and the video context discrimination model is calculated based on the determination result of the context relationship and the positive sample video group or the negative sample video group input into the feature extraction model, and back propagation is performed based on the loss to adjust parameters of the feature extraction model and the video context discrimination model. After repeated training and iteration, the feature extracted by the feature extraction model may be used to determine the context relationship between videos, and the video context discrimination model may accurately determine whether a context relationship exists between videos based on the feature for determining the context relationship between videos.

It should be noted that an execution body of the model training process may be the same execution body as the above video clustering method, or may be other execution bodies to complete the training, and then deploy the trained model into the execution body of the above video clustering method.

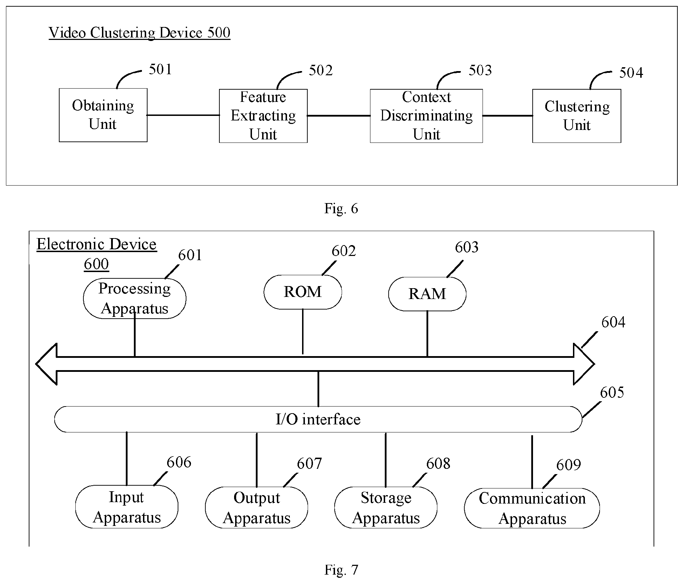

Corresponding to the video clustering method of the above embodiments, Fig. 6 is a structural block diagram of a video clustering device provided by an embodiment of the present disclosure. For ease of description, only parts related to the embodiments of the present disclosure are shown. Referring to Fig. 6, the video clustering device 500 includes: an obtaining unit 501, a feature extracting unit 502, a context discriminating unit 503, and a clustering unit 504.

The obtaining unit 501 is configured to obtain, from a video library, all to-be-classified videos of a user.

The feature extracting unit 502 is configured to extract, for each of the all to-be-classified videos, a feature for determining a context relationship between videos by using a preset feature extraction model.

The context discriminating unit 503 is configured to determine whether a context relationship exists between any two to-be-classified videos according to the feature of each to-be-classified video and a preset video context discrimination model.

The clustering unit 504 is configured to cluster and sort the to-be-classified videos with the context relationship to obtain at least one video group, where videos included in each video group are sorted in a context order.

In one or more embodiments of the present disclosure, the feature extracting unit 502, when extracting, by using the preset feature extraction model, the feature for determining the context relationship between videos, is configured to:

for any to-be-classified video, extract, by using the feature extraction model and based on one or more of visual information, audio information, title information, and video subtitles of the to-be-classified video, the feature for determining the context relationship between videos.

In one or more embodiments of the present disclosure, the context discriminating unit 503, when determining whether the context relationship exists between any two to-be-classified videos according to the feature of each to-be-classified video and the preset video context discrimination model, is configured to:

generate a similarity matrix according to the feature of each to-be-classified video and the video context discrimination model, and determine whether the context relationship exists between any two to-be-classified videos according to the similarity matrix, where any similarity value in the similarity matrix is used to identify a degree of the context relationship between two corresponding to-be-classified videos.

In one or more embodiments of the present disclosure, the context discriminating unit 503, when determining whether the context relationship exists between any two to-be-classified videos, is configured to:

if it is determined that a context relationship exists between a first to-be-classified video and a second to-be-classified video, determine an order between the first to-be-classified video and the second to-be-classified video according to sizes of a corresponding similarity value between the first to-be-classified video and the second to-be-classified video and a corresponding similarity value between the second to-be-classified video and the first to-be-classified video.

In one or more embodiments of the present disclosure, the obtaining unit 501 is further configured to obtain a new video of the user;
the feature extracting unit 502 is further configured to extract, for the new video, a feature for determining a context relationship between videos by using the feature extraction model;
the context discriminating unit 503 is further configured to determine whether the new video has a context relationship with a first video or a last video in any of the video groups according to the feature of the new video, and features of the first video and the last video in the any of the video groups; and
the clustering unit 504 is further configured to, if it is determined that the new video has the context relationship with the first video or the last video in the video group, add the new video into the video group as a new first video or a new last video.

In one or more embodiments of the present disclosure, the clustering unit 504 is further configured to, after obtaining the at least one video group, receive a deleting instruction from the user for any target video in any of the video groups; and
if the target video is not the first video and the last video in the video group, delete the target video, and divide the video group into different video groups from the target video.

In one or more embodiments of the present disclosure, the device further includes a controlling unit, configured to:
determine whether a currently playback video is a last video in a video group in which the currently playback video is located;
if the currently playback video is not the last video in the video group in which the currently playback video is located, control a next video in the video group in which the currently playback video is located to continue playing after the currently playback video ends; or
if the currently playback video is the last video in the video group in which the currently playback video is located, stop continuing playing and/or display prompt information after the currently playback video ends.

In one or more embodiments of the present disclosure, the device further includes a training unit, configured to:
obtain a plurality of positive sample video groups and a plurality of negative sample video groups; and
perform joint training on the feature extraction model and the video context discrimination model according to the plurality of positive sample video groups and the plurality of negative sample video groups.

In one or more embodiments of the present disclosure, the positive sample video group includes two videos that belong to the same series of videos and have a context relationship, the negative sample video group includes two videos that belong to the same series of videos and do not have a context relationship, and/or the negative sample video group includes two videos that belong to different series of videos.

The device provided by this embodiment may be used to implement the technical solutions of the above method embodiments, and the implementation principles and technical effects thereof are similar, which will not be repeated here in this embodiment.

Referring to Fig. 7, Fig. 7 shows a schematic structural diagram of an electronic device 600 suitable for implementing an embodiment of the present disclosure, and the electronic device 600 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (for example, a vehicle-mounted navigation terminal), etc., and fixed terminals such as a digital TV, a desktop computer, etc. The electronic device shown in Fig. 7 is only an example, and should not bring any limitation to the function and scope of use of the embodiments of the present disclosure.

As shown in Fig. 7, the electronic device 600 may include a processing apparatus (such as a central processing unit, a graphics processor, etc.) 601, which may perform various appropriate actions and processes according to a program stored in a read-only memory (abbreviated as ROM) 602 or a program loaded from a storage apparatus 608 into a random access memory (abbreviated as RAM) 603. In the RAM 603, various programs and data required for operations of the electronic device 600 are also stored. The processing apparatus 601, the ROM 602, and the RAM 603 are connected to each other through a bus 604. An input/output (I/O) interface 605 is also connected to the bus 604.

Usually, the following apparatus may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (abbreviated as LCD), a speaker, a vibrator, etc.; the storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 7 shows the electronic device 600 with various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, and the computer program contains program codes for performing the method shown in the flowchart. In such an embodiment, the computer program may be downloaded and installed from a network through the communication apparatus 609, or installed from the storage apparatus 608, or installed from the ROM 602. When the computer program is executed by the processing apparatus 601, the above-mentioned functions defined in the method of the embodiments of the present disclosure are executed.

It should be noted that the above-mentioned computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus, or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as a part of a carrier, and computer-readable program codes are carried in the data signal. This propagated data signal may take various forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted by any suitable medium, including but not limited to: a wire, an optical cable, a radio frequency (RF), etc., or any suitable combination of the above.

The above-mentioned computer-readable medium may be included in the above-mentioned electronic device, or may exist alone without being assembled into the electronic device.

The above computer-readable medium carries one or more programs, and when the one or more programs are executed by the electronic device, the electronic device is caused to execute the method shown in the above embodiments.

The computer program codes used to perform the operations of the present disclosure may be written in one or more programming languages or a combination thereof, the programming languages include object-oriented programming languages such as Java, Smalltalk, C++, and also include conventional procedural programming languages such as "C" language or similar programming languages. The program codes may be executed entirely on a user computer, partly executed on a user computer, executed as an independent software package, partly executed on a user computer and partly executed on a remote computer, or entirely executed on a remote computer or a server. In the case of involving a remote computer, the remote computer may be connected to the user computer through any kind of network, including a local area network (abbreviated as LAN) or a wide area network (abbreviated as WAN), or may be connected to an external computer (for example, connected by using Internet provided by an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagrams may represent a module, a program segment, or a part of code, and the module, the program segment, or the part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagrams and/or the flowchart, and a combination of the blocks in the block diagrams and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. The name of a unit does not constitute a limitation on the unit itself under certain circumstances, for example, a first obtaining unit may also be described as "a unit for obtaining at least two internet protocol addresses".

The functions described above may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In a first aspect, according to one or more embodiments of the present disclosure, a video clustering method is provided, including:
obtaining, from a video library, all to-be-classified videos of a user;
extracting, for each of the all to-be-classified videos, a feature for determining a context relationship between videos by using a preset feature extraction model;
determining whether a context relationship exists between any two to-be-classified videos according to the feature of each to-be-classified video and a preset video context discrimination model; and
clustering and sorting the to-be-classified videos with the context relationship to obtain at least one video group, where videos included in each video group are sorted in a context order.

According to one or more embodiments of the present disclosure, the extracting, by using a preset feature extraction model, a feature for determining a context relationship between videos includes:
for any to-be-classified video, extracting, by using the feature extraction model and based on one or more of visual information, audio information, title information, and video subtitles of the to-be-classified video, the feature for determining the context relationship between videos.

According to one or more embodiments of the present disclosure, the determining whether a context relationship exists between any two to-be-classified videos according to the feature of each to-be-classified video and a preset video context discrimination model includes:
generating a similarity matrix according to the feature of each to-be-classified video and the video context discrimination model, and determining whether the context relationship exists between any two to-be-classified videos according to the similarity matrix, where any similarity value in the similarity matrix is used to identify a degree of the context relationship between two corresponding to-be-classified videos.

According to one or more embodiments of the present disclosure, the determining whether a context relationship exists between any two to-be-classified videos includes:
if it is determined that a context relationship exists between a first to-be-classified video and a second to-be-classified video, determining an order between the first to-be-classified video and the second to-be-classified video according to sizes of a corresponding similarity value between the first to-be-classified video and the second to-be-classified video and a corresponding similarity value between the second to-be-classified video and the first to-be-classified video.

According to one or more embodiments of the present disclosure, after obtaining the at least one video group, the method further includes:
obtaining a new video of the user;
extracting, for the new video, a feature for determining a context relationship between videos by using the feature extraction model;
determining whether the new video has a context relationship with a first video or a last video in any of the video groups according to the feature of the new video, and features of the first video and the last video in the any of the video groups; and
if it is determined that the new video has the context relationship with the first video or the last video in the video group, adding the new video into the video group as a new first video or a new last video.

According to one or more embodiments of the present disclosure, after obtaining the at least one video group, the method further includes:
receiving a deleting instruction from the user for any target video in any of the video groups; and
if the target video is not the first video and the last video in the video group, deleting the target video, and dividing the video group into different video groups from the target video.

According to one or more embodiments of the present disclosure, after obtaining the at least one video group, the method further includes:
determining whether a currently playback video is a last video in a video group where the currently playback video is located;
if the currently playback video is not the last video in the video group where the currently playback video is located, controlling a next video in the video group where the currently playback video is located to continue playing after the currently playback video ends; or
if the currently playback video is the last video in the video group where the currently playback video is located, stopping continuing playing and/or displaying prompt information after the currently playback video ends.

According to one or more embodiments of the present disclosure, the feature extraction model and the video context discrimination model are trained by a process of:
obtaining a plurality of positive sample video groups and a plurality of negative sample video groups; and
performing joint training on the feature extraction model and the video context discrimination model according to the plurality of positive sample video groups and the plurality of negative sample video groups.

According to one or more embodiments of the present disclosure, the positive sample video group includes two videos that belong to the same series of videos and have a context relationship, the negative sample video group includes two videos that belong to the same series of videos and do not have a context relationship, and/or the negative sample video group includes two videos that belong to different series of videos.

In a second aspect, according to one or more embodiments of the present disclosure, a video clustering device is provided, including:
an obtaining unit, configured to obtain, from a video library, all to-be-classified videos of a user;
a feature extracting unit, configured to extract, for each of the all to-be-classified videos, a feature for determining a context relationship between videos by using a preset feature extraction model;
a context discriminating unit, configured to determine whether a context relationship exists between any two to-be-classified videos according to the feature of each to-be-classified video and a preset video context discrimination model; and
a clustering unit, configured to cluster and sort the to-be-classified videos with the context relationship to obtain at least one video group, where videos included in each video group are sorted in a context order.

According to one or more embodiments of the present disclosure, the feature extracting unit, when extracting, by using the preset feature extraction model, the feature for determining the context relationship between videos, is configured to:
for any to-be-classified video, extract, by using the feature extraction model and based on one or more of visual information, audio information, title information, and video subtitles of the to-be-classified video, the feature for determining the context relationship between videos.

According to one or more embodiments of the present disclosure, the context discriminating unit, when determining whether the context relationship exists between any two to-be-classified videos according to the feature of each to-be-classified video and the preset video context discrimination model, is configured to:
generate a similarity matrix according to the feature of each to-be-classified video and the video context discrimination model, and determine whether the context relationship exists between any two to-be-classified videos according to the similarity matrix, where any similarity value in the similarity matrix is used to identify a degree of the context relationship between two corresponding to-be-classified videos.

According to one or more embodiments of the present disclosure, the context discriminating unit, when determining whether the context relationship exists between any two to-be-classified videos, is configured to:
if it is determined that a context relationship exists between a first to-be-classified video and a second to-be-classified video, determine an order between the first to-be-classified video and the second to-be-classified video according to sizes of a corresponding similarity value between the first to-be-classified video and the second to-be-classified video and a corresponding similarity value between the second to-be-classified video and the first to-be-classified video.

According to one or more embodiments of the present disclosure, the obtaining unit is further configured to obtain a new video of the user;
the feature extracting unit is further configured to extract, for the new video, a feature for determining a context relationship between videos by using the feature extraction model;
the context discriminating unit is further configured to determine whether the new video has a context relationship with a first video or a last video in any of the video groups according to the feature of the new video, and features of the first video and the last video in the any of the video groups; and
the clustering unit is further configured to, if it is determined that the new video has the context relationship with the first video or the last video in the video group, add the new video into the video group as a new first video or a new last video.

According to one or more embodiments of the present disclosure, the clustering unit is further configured to, after obtaining the at least one video group, receive a deleting instruction from the user for any target video in any of the video groups; and
if the target video is not the first video and the last video in the video group, delete the target video, and divide the video group into different video groups from the target video.

According to one or more embodiments of the present disclosure, the device further includes a controlling unit, configured to:
determine whether a currently playback video is a last video in a video group in which the currently playback video is located;
if the currently playback video is not the last video in the video group in which the currently playback video is located, control a next video in the video group in which the currently playback video is located to continue playing after the currently playback video ends; or
if the currently playback video is the last video in the video group in which the currently playback video is located, stop continuing playing and/or display prompt information after the currently playback video ends.

According to one or more embodiments of the present disclosure, the device further includes a training unit, configured to:
obtain a plurality of positive sample video groups and a plurality of negative sample video groups; and
perform joint training on the feature extraction model and the video context discrimination model according to the plurality of positive sample video groups and the plurality of negative sample video groups.

According to one or more embodiments of the present disclosure, the positive sample video group includes two videos that belong to the same series of videos and have a context relationship, the negative sample video group includes two videos that belong to the same series of videos and do not have a context relationship, and/or the negative sample video group includes two videos that belong to different series of videos.

In a third aspect, according to one or more embodiments of the present disclosure, an electronic device is provided, including: at least one processor and a memory;
where the memory stores a computer-executable instruction; and
the at least one processor executes the computer-executable instruction stored in the memory to cause the at least one processor to execute the video clustering method according to the above first aspect and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the video clustering method according to the above first aspect and various possible designs of the first aspect is implemented.

In a fifth aspect, according to one or more embodiments of the present disclosure, a computer program product is provided, including a computer-executable instruction, and when the computer-executable instruction is executed by a processor, the video clustering method according to the above first aspect and various possible designs of the first aspect is implemented.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above concept of disclosure. For example, the above features and the technical features with similar functions disclosed in the present disclosure (but not limited to) are replaced each other to form a technical solution.

In addition, although the operations are depicted in a specific order, this should not be understood as requiring the operations to be executed in the specific order shown or in a sequential order. Under certain circumstances, multitasking and parallel processing may be beneficial. Similarly, although several specific implementation details are included in the above discussion, these should not be interpreted as limiting the scope of the present disclosure. Certain features described in the context of separate embodiments may also be implemented in a single embodiment in combination. On the contrary, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms for implementing the claims.

## Claims

1. A video clustering method, comprising:
obtaining, from a video library, all to-be-classified videos of a user;
extracting, for each of the all to-be-classified videos, a feature for determining a context relationship between videos by using a preset feature extraction model;
determining whether a context relationship exists between any two to-be-classified videos according to the feature of each to-be-classified video and a preset video context discrimination model; and
clustering and sorting the to-be-classified videos with the context relationship to obtain at least one video group, wherein videos comprised in each video group of the at least one video group are sorted in a context order.

2. The method of claim 1, wherein extracting the feature for determining the context relationship between the videos by using the preset feature extraction model comprises:
for any to-be-classified video, extracting, by using the feature extraction model and based on one or more of visual information, audio information, title information, and video subtitles of the to-be-classified video, the feature for determining the context relationship between videos.

3. The method of claim 1 or 2, wherein determining whether the context relationship exists between any two to-be-classified videos according to the feature of each to-be-classified video and the preset video context discrimination model comprises:
generating a similarity matrix according to the feature of each to-be-classified video and the video context discrimination model, and determining whether the context relationship exists between any two to-be-classified videos according to the similarity matrix, wherein any similarity value in the similarity matrix is used to identify a degree of the context relationship between two corresponding to-be-classified videos.

4. The method of claim 3, wherein determining whether the context relationship exists between any two to-be-classified videos comprises:
in response to determining that a context relationship exists between a first to-be-classified video and a second to-be-classified video, determining an order of the first to-be-classified video and the second to-be-classified video according to sizes of a corresponding similarity value between the first to-be-classified video and the second to-be-classified video and a corresponding similarity value between the second to-be-classified video and the first to-be-classified video.

5. The method of any one of claims 1 to 4, wherein after obtaining the at least one video group, the method further comprises:
obtaining a new video of the user;
extracting, for the new video, the feature for determining a context relationship between videos by using the feature extraction model;
determining whether the new video has a context relationship with a first video or a last video in any of video group according to the feature of the new video, and features of the first video and the last video in any of the video group; and
in response to determining that the new video has the context relationship with the first video or the last video in the video group, adding the new video into the video group as a new first video or a new last video.

6. The method of any one of claims 1 to 4, wherein after obtaining the at least one video group, the method further comprises:
receiving a deleting instruction from the user for any target video in any of the video group; and
in response to the target video not being the first video and the last video in the video group, deleting the target video, and dividing the video group into different video groups from the target video.

7. The method of any one of claims 1 to 6, wherein after obtaining the at least one video group, the method further comprises:
determining whether a currently playback video is the last video in a video group in which the currently playback video is located;
in response to the currently playback video not being the last video in the video group in which the currently playback video is located, controlling a next video in the video group in which the currently playback video is located to continue playing after the currently playback video ends; or
in response to the currently playback video being the last video in the video group in which the currently playback video is located, stopping continuing playing and/or displaying prompt information after the currently playback video ends.

8. The method of any of claims 1 to 4, wherein the feature extraction model and the video context discrimination model are trained by a process of:
obtaining a plurality of positive sample video groups and a plurality of negative sample video groups; and
performing joint training on the feature extraction model and the video context discrimination model according to the plurality of positive sample video groups and the plurality of negative sample video groups.

9. The method of claim 8, wherein the positive sample video group comprises two videos that belong to a same series of videos and have a context relationship, the negative sample video group comprises two videos that belong to a same series of videos and do not have a context relationship, and/or, the negative sample video group comprises two videos that belong to different series of videos.

10. A video clustering device, comprising:
an obtaining unit, configured to obtain, from a video library, all to-be-classified videos of a user;
a feature extracting unit, configured to extract, for each of the all to-be-classified videos, a feature for determining a context relationship between videos by using a preset feature extraction model;
a context discriminating unit, configured to determine whether a context relationship exists between any two to-be-classified videos according to the feature of each to-be-classified video and a preset video context discrimination model; and
a clustering unit, configured to cluster and sort the to-be-classified videos with the context relationship to obtain at least one video group, wherein videos comprised in each video group of the at least one video group are sorted in a context order.

11. An electronic device, comprising: at least one processor and a memory;
wherein the memory stores computer-executable instructions; and
the at least one processor executes the computer-executable instructions stored in the memory to cause the at least one processor to execute the method of any of claims 1 to 9.

12. A computer-readable storage medium, wherein computer-executable instructions are stored in the computer-readable storage medium, and when the computer-executable instructions are executed by a processor, the method of any of claims 1 to 9 is implemented.

13. A computer program product, wherein the computer program product comprises computer-executable instructions, and when the computer-executable instructions are executed by a processor, the method of any of claims 1 to 9 is implemented.
